Europäisches Patentamt

European Patent Office

Office européen des brevets

(11) Veröffentlichungsnummer: **0 017 828**
**B1**

(12) **EUROPÄISCHE PATENTSCHRIFT**

(45) Veröffentlichungstag der Patentschrift:
15.09.82

(51) Int. Cl.³: **B 01 D 53/18**

(21) Anmeldenummer: 80101679.1

(22) Anmeldetag. 28.03.80

(54) **Vorrichtung zum Verteilen von Waschflüssigkeit auf einen mit Einbauten versehenen Wascher oder Abtreiber.**

(30) Priorität: 24.04.79 DE 2916462

(43) Veröffentlichungstag der Anmeldung:
29.10.80 Patentblatt 80/22

(45) Bekanntmachung des Hinweises auf die Patenterteilung:
15.09.82 Patentblatt 82/37

(84) Benannte Vertragsstaaten:
**BE DE FR GB IT NL**

(56) Entgegenhaltungen:
**DE-A-1 667 039**
**DE-A-1 667 327**
**DE-A-2 620 848**
**DE-A-2 820 200**
**DE-B-1 070 141**
**US-A-3 273 872**

(73) Patentinhaber: **Dr. C. Otto & Comp. Gesellschaft mit beschränkter Haftung, Christstrasse 9, D-4630 Bochum 1 (DE)**

(72) Erfinder: **Ritter, Horst, Bergebuschstrasse 12, D-4300 Essen (DE)**

(74) Vertreter: **Radt, Finkener, Ernesti Patentanwälte, Heinrich-König-strasse 119, D-4630 Bochum 1 (DE)**

Vorrichtung zum Verteilen von Waschflüssigkeit auf einen mit Einbauten
versehenen Wascher oder Abtreiber

Die Erfindung betrifft eine Vorrichtung zum Verteilen von Waschflüssigkeit auf einen mit Einbauten versehenen Wascher oder Abtreiber, bei der die Waschflüssigkeit den Wascher oder Abtreiber im Gegenstrom zu einem zu behandelnden Gas oder Dämpfestrom von oben nach unten durchströmt und durch in den Verteilerböden regelmäßig verteilt angebrachte Stutzen auf ein Verteilersystem geleitet wird, das unterhalb der Austrittsöffnungen der Stutzen angeordnet ist, während das Gas oder die Dämpfe durch in den Verteilerböden des Waschers oder Abtreibers vorgesehene Öffnungen tritt, die oberhalb des Flüssigkeitsspiegels enden.

Es ist bekannt, Vorrichtungen dieser Art für die Verteilung von Waschflüssigkeit in einem Wascher zu benutzen, der mit Einbauten, wie Füllkörpern oder Streckmetallpaketen, versehen ist. Als Verteilersystem für die Waschflüssigkeit verwendet man im allgemeinen Düsen, Rinnen oder Spritzteller. Die Waschflüssigkeit fließt durch Überlaufschlitze, die in der Höhenrichtung verstellbar sind, in die in den Verteilerböden angebrachten Stutzen und fällt auf die darunter befindlichen Spritzteller. Die Fallhöhe zwischen dem Stutzenüberlauf und dem Spritzteller bewirkt ein gleichmäßiges Verregnen der Waschflüssigkeit über den Wascherquerschnitt. Die bekannten Vorrichtungen eignen sich für die Verteilung ganz bestimmter Flüssigkeitsmengen über dem Wascherquerschnitt.

Wenn sich die Flüssigkeitsmengen in bestimmten Zeitabschnitten erheblich ändern, z. B. sich verdoppeln oder vierteln, sind die bekannten Verteilerböden für eine gleichmäßige Flüssigkeitsverteilung nicht mehr geeignet.

Die Aufgabe, die der Erfindung zugrunde liegt, besteht darin, eine Vorrichtung zum Verteilen von Waschflüssigkeit auf die Einbauten eines Waschers oder Abtreibers so auszubilden, daß eine gleichmäßige Verteilung der Flüssigkeit auch dann gewährleistet ist, wenn die Menge der zugeführten Flüssigkeit erheblichen Schwankungen unterliegt.

Ausgehend von einer Vorrichtung der eingangs beschriebenen Art besteht die Erfindung darin, daß die Stutzen unterhalb der Verteilerböden konzentrisch und im Abstand von einem Mantelrohr umgeben und an ihrem unteren Ende mit einer Düse mit großem Querschnitt versehen sind, und daß sie oberhalb der Düse im Bereich des Mantelrohres vorzugsweise zwei sich gegenüberliegende Durchtrittsschlitze für die Waschflüssigkeit aufweisen, wobei ein Verteilersystem unterhalb der Düsen angeordnet und ein weiteres Verteilersystem oberhalb der Düsen an einem ein Stück aus dem Mantelrohr herausragenden Abschnitt der Stutzen angebracht ist.

Weitere Merkmale der Erfindung ergeben sich aus den Unteransprüchen.

Mit der Vorrichtung gemäß vorliegender Erfindung wird eine gleichmäßige Verteilung der Flüssigkeit über den Querschnitt des Waschers oder Abtreibers in einem zwischen 20 und 100% liegenden Bereich sichergestellt.

Auf der Zeichnung ist ein Ausführungsbeispiel der Erfindung dargestellt. Es zeigt

Fig. 1 einen Schnitt durch eine in einen Wascher eingebaute Berieselungseinrichtung,

Fig. 2 einen Schnitt gemäß der Linie A-A der Fig. 1,

Fig. 3 eine Draufsicht auf den an dem Stutzen angebrachten Spritzteller und

Fig. 4 und 5 eine Draufsicht auf die beiden unterhalb der Düse angeordneten Spritzteller.

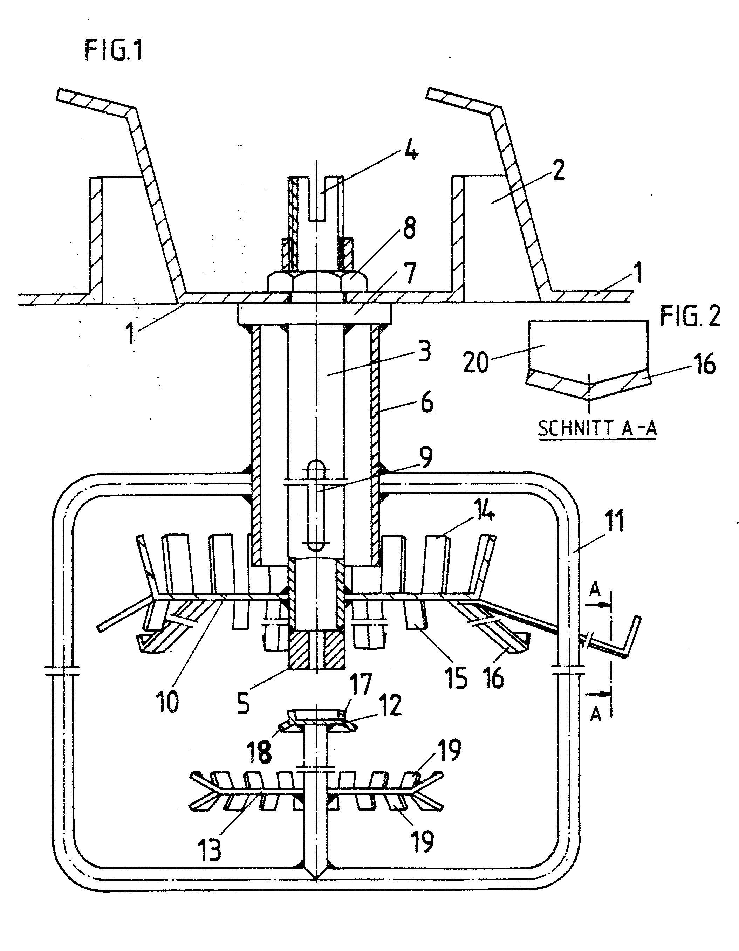

Die auf Fig. 1 dargestellte Berieselungseinrichtung ist in üblicher Weise in einem Verteilerboden 1 des Waschers angebracht. Der Verteilerboden ist mit Durchtritten 2 für das von unten nach oben durchtretende Gas versehen. Das sich auf dem Verteilerboden sammelnde Wasser gelangt in den Stutzen 3, der an seinem oberen Ende mit in der Höhe verstellbaren Überlaufschlitzen 4 versehen ist. Am unteren Ende des Stutzens ist eine Düse 5 mit großem Durchmesser angebracht. Der Stutzen ist konzentrisch im Abstand von einem Mantelrohr 6 umgeben, das an einer Platte 7 angeschweißt ist, an der auch der Stutzen befestigt ist. Die Platte wird mit einer Mutter 8 an dem Verteilerboden 1 gehalten, die auf ein Gewinde des oberen Abschnittes des Stutzens 3 aufgeschraubt ist. Der Stutzen 3 ragt unten ein Stück aus dem Mantelrohr 6 hinaus und ist im Bereich des unteren Endes des Mantelrohres mit zwei sich gegenüberliegenden Schlitzen 9 versehen. An dem gegenüber dem Rohr 6 überstehenden Abschnitt ist an dem Stutzen ein Spritzteller 10 befestigt. An dem Mantelrohr 6 ist eine rahmenartige Halterung 11 angebracht, an der ein Stück unterhalb der Düse 5 zwei weitere Spritzteller, und zwar ein oberer Spritzteller 12 mit kleinerem Durchmesser und ein größerer Spritzteller 13, befestigt sind.

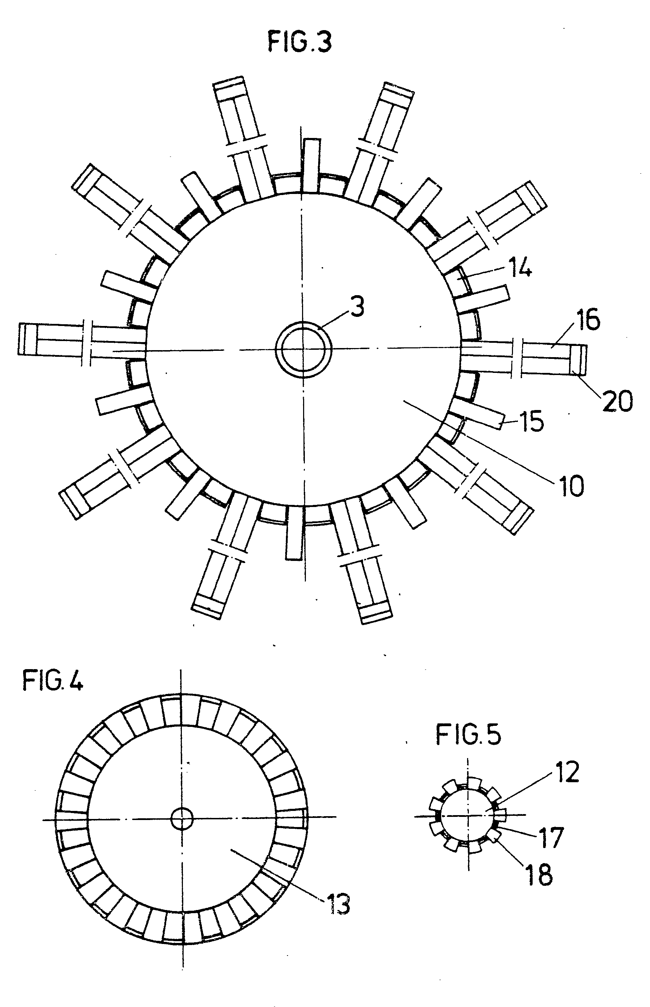

Der an dem Stutzen sitzende Spritzteller 10 ist auf Fig. 3 dargestellt. Er besteht aus einer Wanne mit einem aufgebogenen Rand, der in bestimmten Abständen bis auf den Boden der Wanne eingeschnitten ist. Die eingeschnittenen Abschnitte sind teilweise schräg nach unten gebogen und teilweise ganz entfernt. An den Stellen, an denen die Abschnitte entfernt wurden, sind an der Wanne weit in den Raum hineinragende Verteilerfinger angebracht. Aus Fig. 3 ergibt sich, daß sich zwischen zwei stehengebliebenen hochgebogenen Randabschnitten 14 abwechselnd jeweils ein nach unten abgebogener Randabschnitt 15 oder ein Verteilerfinger 16 befindet. Die Verteilerfinger 16 sind, wie Fig. 2 zeigt, rinnenförmig ausgebildet und mit einem aufgebogenen Rand 20 versehen.

Die ein Stück unterhalb der Düse 5 angebrachten Spritzteller 12 und 13, die konzentrisch untereinander angeordnet sind, bestehen ebenfalls aus Wannen, deren Ränder eingeschnitten sind, wobei jeder zweite Randabschnitt schräg nach unten gebogen ist. Während bei dem oberen kleineren Spritzteller 12 die nach oben gerichteten Abschnitte 17 nahezu senkrecht nach oben ragen und die nach unten gerichteten Abschnitte 18 schräger nach unten verlaufen, sind die Randabschnitte 19 des größeren Spritztellers 13 etwa um den gleichen Winkel schräg nach oben bzw. unten abgebogen.

Die Vorrichtung arbeitet wie folgt:

Die zu verteilende Waschflüssigkeit fließt durch die oberen Schlitze 4 in den Stutzen 3. Die am Ende des Stutzens angeordnete Düse 5 zentriert den Flüssigkeitsstrahl, der auf den darunter angeordneten Spritzteller 12 auftrifft. Der Strahl wird aufgerissen und fällt als gleichmäßiger Regen auf die darunter befindlichen Waschereinbauten. Wenn die Flüssigkeitsaufgabe verringert wird, tropft ein Teil der Flüssigkeit von dem Spritzteller 12 auf den darunter angeordneten Spritzteller 13, der einen größeren Durchmesser hat und die auftreffende geringe Menge gleichmäßig verteilt.

Bei sehr großen Flüssigkeitsmengen, die ein Vielfaches der vorstehend erwähnten Flüssigkeitsmenge betragen können, staut sich die Flüssigkeit in dem Stutzen 3 oberhalb der Düse 5 auf. Dadurch gelangt ein Teil der Flüssigkeit durch die über der Düse 5 angebrachten Schlitze 9 auf den Spritzteller 10, durch den sie über die abgebogenen Randabschnitte 15 und die weit in den Raum ragenden Verteilerfinger 16 auf die mittleren und äußeren Zonen des Berieselungsbereiches verteilt wird.

Versuche haben ergeben, daß mit einer solchen Berieselungseinrichtung sehr kleine und sehr große Flüssigkeitsmengen, die das 5- bis 6fache der kleinen Menge betragen können, gleichmäßig auf die Einbauten verteilt werden.

## Patentansprüche

1. Vorrichtung zum Verteilen von Waschflüssigkeit auf einen mit Einbauten versehenen Wascher oder Abtreiber, bei der die Waschflüssigkeit den Wascher oder Abtreiber im Gegenstrom zu einem zu behandelnden Gas oder Dämpfestrom von oben nach unten durchströmt und durch in den Verteilerböden regelmäßig verteilt angebrachte Stutzen auf ein Verteilersystem geleitet wird, das unterhalb der Austrittsöffnungen der Stutzen angeordnet ist, während das Gas oder die Dämpfe durch in den Verteilerböden des Waschers oder Abtreibers vorgesehene Öffnungen tritt, die oberhalb des Flüssigkeitsspiegels enden, dadurch gekennzeichnet, daß die Stutzen (3) unterhalb der Verteilerböden (1) konzentrisch und im Abstand von einem Mantelrohr (6) umgeben und an ihrem unteren Ende mit einer Düse (5) mit großem Querschnitt versehen sind, und daß sie oberhalb der Düse (5) im Bereich des Mantelrohres (6) vorzugsweise zwei sich gegenüberliegende Durchtrittsschlitze (9) für die Waschflüssigkeit aufweisen, wobei ein Verteilersystem unterhalb der Düse (5) angeordnet und ein weiteres Verteilersystem oberhalb der Düse (5) an einem ein Stück aus dem Mantelrohr (6) herausragenden Abschnitt der Stutzen (3) angebracht ist.

2. Vorrichtung nach Anspruch 1, dadurch gekennzeichnet, daß das an den Stutzen (3) angebrachte Verteilersystem aus einem mit einem nach oben gebogenen Rand versehenen Spritzteller (10) besteht, dessen Rand in regelmäßigen Abständen bis auf den Boden des Tellers eingeschnitten ist, wobei ein Teil der eingeschnittenen Randabschnitte nach unten abgebogen und ein anderer Teil entfernt ist, derart, daß sich am Rand des Spritztellers (10) zwischen zwei stehengebliebenen, nach oben ragenden Abschnitten (14) jeweils abwechselnd ein schräg nach unten abgebogener Abschnitt (15) und ein entfernter Abschnitt befinden, wobei unterhalb eines entfernten Abschnittes ein ebenfalls schräg nach unten gerichteter Verteilerfinger (16) angebracht ist, der weit in den Raum ragt.

3. Vorrichtung nach Anspruch 2, dadurch gekennzeichnet, daß der Verteilerfinger (16) aus einer Rinne besteht, die an ihrem Ende mit einem nach oben abgebogenen Rand (20) versehen ist.

4. Vorrichtung nach den Ansprüchen 1 bis 3, dadurch gekennzeichnet, daß das unterhalb der Düse (5) angeordnete Verteilersystem aus zwei übereinander angeordneten Spritztellern (12, 13) mit unterschiedlichen Durchmessern besteht.

5. Vorrichtung nach Anspruch 4, dadurch gekennzeichnet, daß die unterhalb der Düse (5) angeordneten Spritzteller (12, 13) mit einem bis auf den Boden des Tellers eingeschnittenen Rand versehen sind, daß die Randabschnitte (17, 18; 19) abwechselnd nach oben und schräg nach unten abgebogen sind und daß der obere Spritzteller (12) im Durchmesser kleiner als der untere Spritzteller (13) ist.

6. Vorrichtung nach den Ansprüchen 4 bis 5, dadurch gekennzeichnet, daß die unterhalb der Düse (5) angeordneten Spritzteller (12, 13) an einer rahmenartigen Halterung (11) befestigt sind, die an dem Mantelrohr (6) angebracht ist.

## Claims

1. A device for distributing a washing liquid about a washing tower or stripper provided with installations, in which the washing liquid flows down through the washer or stripper in countercurrent to a gas or current of vapour for treatment and is fed, via spigots disposed in a regularly distributed pattern in the distributor trays, to a distributor system disposed beneath the spigot outlet apertures, the gas or the vapours passing through openings formed in the washer or stripper distributor trays and terminating above the level of the liquid, characterised in that the spigots (3) are surrounded, beneath the distributor trays (1), concentrically and at a distance by a jacket tube (6) and are provided, at their bottom end, with a large cross-section nozzle (5), and above the nozzle (5) in the region of the jacket tube (6) they have preferably two oppositely situated passage slots (9) for the washing liquid, one distributor system being disposed beneath the nozzle (5) and another distributor system being disposed above the nozzle (5) on a section of the spigots (3) projecting slightly from the jacket tube (6).

2. A device according to claim 1, characterised in that the distributor system disposed on the spigots (3) consists of a spray plate (10) having an upwardly bent edge which at regular intervals has incisions extending as far as the plate base, some of the edge portions formed by the incisions being bent downwardly and some being removed so that an obliquely downwardly bent portion (15) and a removed portion occur alternately at the edge of the spray plate (10) between each two remaining upwardly extending portions (14), a distributor finger (16) which also extends obliquely downwards and projects far into the chamber being provided beneath a removed portion.

3. A device according to claim 2, characterised in that the distributor finger (16) consists of a channel having an upwardly bent edge (20) at its end.

4. A device according to claims 1 to 3, characterised in that the distributor system disposed beneath the nozzle (5) consists of two spray plates (12, 13) of different diameters disposed one above the other.

5. A device according to claim 4, characterised in that the spray plates (12, 13) disposed beneath the nozzle (5) are provided with an edge having incisions extending as far as the base of the plate, the edge portions (17, 18; 19) are bent alternately upwards and obliquely downwards and the top spray plate (12) is of a smaller diameter than the bottom spray plate (13).

6. A device according to claims 4 and 5, characterised in that the spray plates (12, 13) disposed beneath the nozzle (5) are secured to a mount (11) in the form of a frame disposed on the jacket tube (6).

**Revendications**

1. Dispositif de répartition de liquide de lavage sur un laveur ou une colonne d'épuisement équipée d'obstacles, dans lequel le liquide de lavage circule en traversant le laveur ou la colonne d'épuisement du haut vers le bas, à contre-courant d'un courant de gaz ou de vapeurs à traiter, et est conduit sur un système de répartition par des tubulures montées et réparties régulièrement dans les fonds de répartition, ce système de répartition étant disposé au-dessous des ouvertures de sortie des tubulures, tandis que le gaz ou les vapeurs passent par des ouvertures dans les fonds de répartition du laveur ou de la colonne d'épuisement débouchant au-dessus du niveau du liquide, dispositif caractérisé en ce que, au-dessous du fonds de répartition (1), les tubulures (3) sont entourées concentriquement et à distance par un tube extérieur (6) et sont équipées à leur extrémité inférieure d'une buse (5) de grande section transversale, et en ce qu'elles comportent, au-dessus de la buse (5) dans la région du tube extérieur (6), de préférence deux fentes de traversée (9) se faisant face, pour le liquide de lavage, en système de répartition étant disposé au-dessous de la buse (5) et un autre système de répartition étant monté au-dessus de la buse (5) sur une section de la tubulure (3) sortant d'une longueur de tube extérieur (6).

2. Dispositif selon la revendication 1, caractérisé en ce que le système de répartition monté sur la tubulure (3) consiste en un plateau de pulvérisation (10) prévu avec un rebord replié vers le haut, dont le rebord est entaillé à intervalles réguliers jusqu'au fond du plateau, une partie de section de bord entaillée étant recourbée vers le bas et une autre partie étant éliminée, de manière que sur le bord du plateau de pulvérisation (10) entre deux sections (14) en saillie vers le haut, disposées verticalement se trouvent alternativement une section (15) repliée obliquement vers le bas, et une section éliminée, un doigt de répartition (16) également dirigé obliquement vers le bas, faisant saillie loin dans le volume, étant monté au-dessous d'une section éliminée.

3. Dispositif selon la revendication 2, caractérisé en ce que le doigt de répartition (16) consiste en une rigole qui comporte à son extrémité un rebord (20) replié vers le haut.

4. Dispositif selon les revendications 1 à 3, caractérisé en ce que le système de répartition disposé au-dessous de la buse (5) consiste en deux plateaux pulvérisateurs (12, 13) disposés l'un au-dessous de l'autre avec des diamètres différents.

5. Dispositif selon la revendication 4, caractérisé en ce que les plateaux de pulvérisation (12, 13) disposés au-dessous de la buse (5) sont prévus avec un rebord entaillé jusqu'au fond de la cuvette, les sections de rebord (17, 18, 19) étant repliées alternativement vers le haut et obliquement vers le bas et le plateau de pulvérisation supérieur (12) ayant un diamètre inférieur à celui du plateau de pulvérisation (13) inférieur.

6. Dispositif selon les revendications 4 et 5, caractérisé en ce que les plateaux de pulvérisation (12, 13) disposés au-dessous de la buse (5) sont fixés sur une attache (11) en forme de cadre qui est montée sur le tube extérieur (6).

0 017 828

FIG.1

FIG.2

SCHNITT A-A

## FIG.3

## FIG.4

## FIG.5